# EUROPEAN PATENT APPLICATION

(11) **EP 4 794 227 A1**
(43) Date of publication of application: **19.08.2026**
(21) Application number: 24884051.4
(22) Date of filing: 23.07.2024
(51) Int. Cl.: H04B 17/12

(54) **ANTENNA CALIBRATION METHOD AND APPARATUS, ELECTRONIC DEVICE, AND READABLE STORAGE MEDIUM**

(30) Priority: 30.10.2023 CN 202311429825
(71) Applicant: ZTE CORPORATION, Shenzhen, Guangdong 518057 (CN)
(72) Inventor: ZHOU, Jiangyun, Shenzhen, Guangdong 518057 (CN); SONG, Zhikang, Shenzhen, Guangdong 518057 (CN); XUE, Xin, Shenzhen, Guangdong 518057 (CN); CHENG, Xudong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/106927
(87) International publication number: WO 2025/092043

(57) **Abstract**

The present application relates to the technical field of communications, and discloses an antenna calibration method and apparatus, an electronic device, and a readable storage medium. The method comprises: selecting a plurality of groups of alternative calibration weights from a calibration weight set, and sending, to a target terminal, a channel state information reference signal (CSI-RS) corresponding to each group of alternative calibration weights; determining a target calibration weight in the plurality of groups of alternative calibration weights on the basis of CSI-RS resource indicator fed back by the target terminal; and calibrating an antenna array on the basis of the target calibration weight.

## Description

### CROSS-REFERENCE TO RELATED APPLICATIONS

This application claims priority to Chinese Application No. 202311429825.0, filed on October 30, 2023 to CNIPA, entitled "ANTENNA CALIBRATION METHOD AND APPARATUS, ELECTRONIC DEVICE, AND READABLE STORAGE MEDIUM", the entirety of which is incorporated herein by reference.

### TECHNICAL FIELD

The embodiments of the present application relate to the technical field of communications, particularly relates to an antenna calibration method and apparatus, an electronic device, and a readable storage medium.

### BACKGROUND

In a Multiple-Input Multiple-Output communication system, two sets of circuits are usually set up at the radio frequency (RF) end of each antenna to complete signal transmission and reception respectively. Due to hardware process errors and nonlinear distortion of active components such as amplifiers, the two sets of circuits at the RF end can hardly achieve completely consistent characteristics.

In order to eliminate the impact of phase deviation between RF receiving and transmitting channels on the shaping of traffic channels, antenna calibration is generally carried out by adding hardware devices, but the hardware cost is relatively high. If the downlink antenna is not calibrated, it will affect the downlink transmission rate of the terminal and reduce the user experience.

### SUMMARY

The embodiments of the present application provide an antenna calibration method and apparatus, an electronic device, and a readable storage medium, to solve the problem of high calibration cost in related technologies by adding hardware device for antenna calibration.

In the first aspect, the embodiments of the present application provide an antenna calibration method, performed by a base station, including: selecting a plurality of groups of alternative calibration weights from a calibration weight set, and sending, to a target terminal, channel state information reference signals (CSI-RS) corresponding to the plurality of groups of alternative calibration weights; determining, on the basis of CSI-RS resource indication information fed back by the target terminal, a target calibration weight from the plurality of groups of alternative calibration weights; and calibrating an antenna array on the basis of the target calibration weight.

In the second aspect, the embodiments of the present application provide an antenna calibration method, performed by a target terminal, including: receiving multiple channel state information reference signals (CSI-RS) from a base station; wherein each CSI-RS corresponds to alternative calibration weights, and the alternative calibration weights belong to any one group among a plurality of groups of alternative calibration weights which are selected by the base station from a calibration weight set; measuring resources corresponding to the multiple CSI-RS and determining CSI-RS resource indication information corresponding to a target CSI-RS from the multiple CSI-RS; sending the CSI-RS resource indication information to the base station, such that the base station determines, on the basis of the CSI-RS resource indication information, a target calibration weight for calibrating an antenna array from the plurality of groups of alternative calibration weights.

In the third aspect, the embodiments of the present application provide an electronic device, including a processor and a memory, the memory storing programs or instructions executable on the processor, which when executed by the processor, implements the steps of the method as described in the first aspect or the second aspect.

In the fourth aspect, the embodiments of the present application provide a readable storage medium, storing programs or instructions, which when executed by a processor, implements the steps of the method as described in the first aspect or the second aspect.

### BRIEF DESCRIPTION OF DRAWINGS

The accompanying drawings are incorporated into the specification and form a part of the specification, illustrating embodiments in accordance with the present application and used together with the specification to explain the principles of the present application.
Fig. 1 shows a flowchart of an antenna calibration method provided by embodiments of the present application.
Fig. 2 shows a schematic diagram of the structure of an antenna array provided by embodiments of the present application.
Fig. 3 shows a schematic diagram of a scanning result of a plurality of groups of alternative calibration weights provided by embodiments of the present application.
Fig. 4 shows a flowchart of another antenna calibration method provided by embodiments of the present application.
Fig. 5 shows a schematic diagram of the structure of an antenna calibration system provided by embodiments of the present application.
Fig. 6 shows a schematic diagram of the structure of an electronic device provided by embodiments of the present application.

### DETAILED DESCRIPTION

Exemplary embodiments will be described in detail herein, with examples shown in the accompanying drawings. When referring to the accompanying drawings, unless otherwise indicated, the same numbers in different drawings represent the same or similar elements. The implementation described in the following exemplary embodiments do not represent all implementations consistent with the present application. On the contrary, they are only examples of devices and methods consistent with some aspects of the present application as described in the accompanying claims.

Whether it is a single polarized antenna or a dual polarized antenna, the antenna polarization of devices at both ends need to be consistent. If the polarization is different or there is an angle deviation, the overlapping area of the polarized signals will be small, which will cause weak signals and affect the communication effect. An existing antenna calibration method generally implements antenna calibration by adding hardware devices, which incurs high calibration cost.

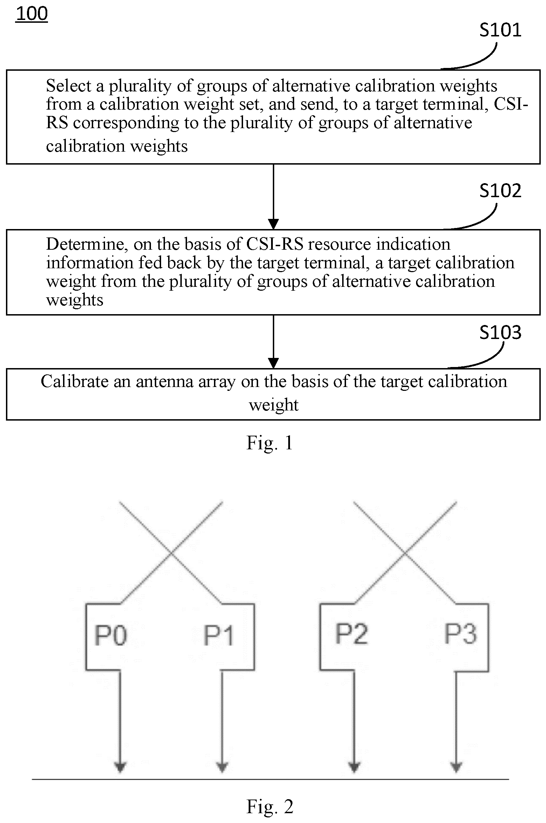

The embodiments of the present application provide an antenna calibration method, in which an antenna array is calibrated based on feedback information from each target terminal, there is no need to add hardware devices to calibrate the antenna, and the antenna calibration cost can be cost. Fig. 1 shows a flowchart of an antenna calibration method provided by the embodiments of the present application, which is applied a base station. As shown in the figure, the method 100 may include the following steps.

At Step S101: a plurality of groups of alternative calibration weights are selected from a calibration weight set, and channel state information reference signals CSI-RS corresponding to the plurality of groups of alternative calibration weights are sent to a target terminal.

At Step S102: on the basis of CSI-RS resource indication information fed back by the target terminal, a target calibration weight is determined from the plurality of groups of alternative calibration weights.

At Step S103: an antenna array is calibrated on the basis of the target calibration weight.

The target terminal is a terminal used for calibrating the antenna array.

In specific implementation, the base station selects a plurality of groups of alternative calibration weights from a pre-configured calibration weight set, and sends, to the target terminal, the Channel State Information Reference Signals (CSI-RS) corresponding to the plurality of groups of alternative calibration weights. Here, one group of alternative calibration weights can correspond to multiple CSI-RS.

After receiving multiple CSI-RS, the target terminal measures the resources corresponding to the CSI-RS respectively. Based on the measurement results, the terminal sends, to the base station, the CSI-RS resource indication information corresponding to the best performing CSI-RS among the multiple CSI-RS. The base station can determine the target calibration weight from the plurality of groups of alternative calibration weights on the basis of the CSI-RS resource indication information fed back by the target terminal. Then, based on the target calibration weight, the antenna array is calibrated.

Through the above steps, since the base station calibrates the antenna array based on the feedback information from the target terminal, there is no need to add hardware devices to calibrate the antenna, and the cost of antenna calibration can be reduced. Besides, according to the CSI-RS resource indication information fed back by each target terminal, the target calibration weight can be determined from the plurality of groups of alternative calibration weights, so that downlink channel measurement that better matches the target terminal can be achieved, thereby improving the downlink transmission rate of the target terminal and enhancing the user experience.

In a possible implementation, in order to further improve the downlink transmission rate of the target terminal, the pre-configured calibration weight set should include full-space complete calibration weights as much as possible. The calibration weight set can be determined in the following way: calibration weights of multiple polarized antennas in the antenna array are determined according to a predefined rule; and the calibration weight set is determined on the basis of the calibration weights of multiple polarized antennas in the antenna array.

In specific implementation, the antenna array can include multiple polarized antennas, and a pre-coding matrix specified in the protocol takes into account the specific structure of the antenna array, as shown in Fig. 2. The antenna array includes polarized antennas P0, P1, P2, and P3, where polarized antennas {P0, P2} and {P1, P3} are in two polarization directions, and {P0, P1} and {P2, P3} are two polarized antenna pairs, respectively. The calibration weight set is determined based on the calibration weights of multiple polarized antennas in the antenna array.

The predefined rule includes that: the polarized antenna pairs of the antenna array are determined on the basis of the polarization directions of the multiple polarized antennas, where each polarized antenna pair includes a first polarized antenna and a second polarized antenna; any polarized antenna pair among the polarized antenna pairs is used as a reference antenna pair, and the calibration weight of the first polarized antenna in the reference antenna pair is used as the reference weight; the reference weight is determined as the calibration weight of the first polarized antenna in a target antenna pair, where the target antenna pair is any polarized antenna pair among the polarized antenna pairs; and the calibration weight of the second polarized antenna in the target antenna pair is determined on the basis of the reference weight, a first phase difference, and second phase difference, where the first phase difference is the phase difference between the first polarized antenna in the reference antenna pair and the second polarized antenna in the reference antenna pair, and the second phase difference is the phase difference between the target antenna pair and the reference antenna pair.

In specific implementation, since the pre-coding weights in the protocol default that two polarizations have the same steering vector, and there is a phase difference between polarizations. Therefore, the polarized antenna pairs of the antenna array are determined based on the polarization directions of the polarized antennas. Taking the antenna array structure in Fig. 2 as an example, the antenna array includes two polarized antenna pairs {P0, P1} and {P2, P3}, and the predefined rule thereof can include that: either polarized antenna pair of the two polarized antenna pairs is used as the reference antenna pair, for example, {P0, P1} is used as the reference antenna pair, and the calibration weight of the first polarized antenna PO in the reference antenna pair is used as the reference weight. Here, the reference weight can be set to 1. Firstly, the first polarized antenna P2 in the target polarized antenna pair {P2, P3} is configured as the reference weight 1, then, based on the reference weight 1, the first phase difference, and the second phase difference, the calibration weight of the second polarized antenna in the target antenna pair is determined. In some cases, the first phase difference between channels of one polarization can be aligned to another polarization, for example [1,1**e^*^{*jπy*/}*^{2Y},* 1,1**e*^{*^jπ(y*/*2Y)*}], and then the second phase difference between polarizations and the phase difference between channels within the same polarization can be corrected, for example [1,1**e*^{*^jπy*/}*^{2Y} ,*1,1*e^{^*jπ*(*y*/*2*Y+2x/X)}], where x=0~X-1, y=0-Y-1, and X, Y are oversampling factors that can be configured based on actual situations. In this way, the total number of groups of calibration weights in the calibration weight set is N=X*Y, assuming that the number of each group of calibration weight is 0~N-1.

In a possible implementation, selecting the plurality of groups of alternative calibration weights from the calibration weight set in the above Step S101 includes that: measurement capacity configuration information of the target terminal is obtained; and the plurality of groups of alternative calibration weights that match the measurement capacity configuration information are selected from the calibration weight set.

In specific implementation, prior to antenna calibration, the target terminal can send measurement capacity configuration information to the base station, such as the number of supported CSI-RS measurements. The base station selects a plurality of groups of alternative calibration weights that match the measurement capacity configuration information from the calibration weight set. For example, if the number of CSI-RS measurements supported by the target terminal is T, the base station can select no more than T groups of alternative calibration weights from the calibration weight set. In another implementation, the base station can select T groups of alternative calibration weights from the calibration weight set to fully utilize terminal capacity. In some cases, if the number of calibration weight groups in the calibration weight set is less than T, all calibration weights in the calibration set can be used as alternative calibration weights corresponding to the target terminal.

In a possible implementation, when the number of groups of calibration weights in the calibration weight set is greater than the number of groups of alternative calibration weights, multiple rounds of calibration are performed as follows.

In the current round of calibration, at least one group of calibration weights is selected from the calibration weight set except for the selected alternative calibration weights, to replace the alternative calibration weights in the plurality of groups of alternative calibration weights except for the target calibration weight determined in the previous round of calibration; and CSI-RS corresponding to the groups of alternative calibration weights are sent to the target terminal; the target calibration weight in the current round of calibration is determined on the basis of the CSI-RS resource indication information fed back by the target terminal, the antenna array is calibrated, and the above process is repeated until all calibration weights in the calibration weight set are selected.

In the above Step S103, calibrating the antenna array on the basis of the target calibration weight includes that: the antenna array is calibrated on the basis of the target calibration weight determined in the final round of calibration.

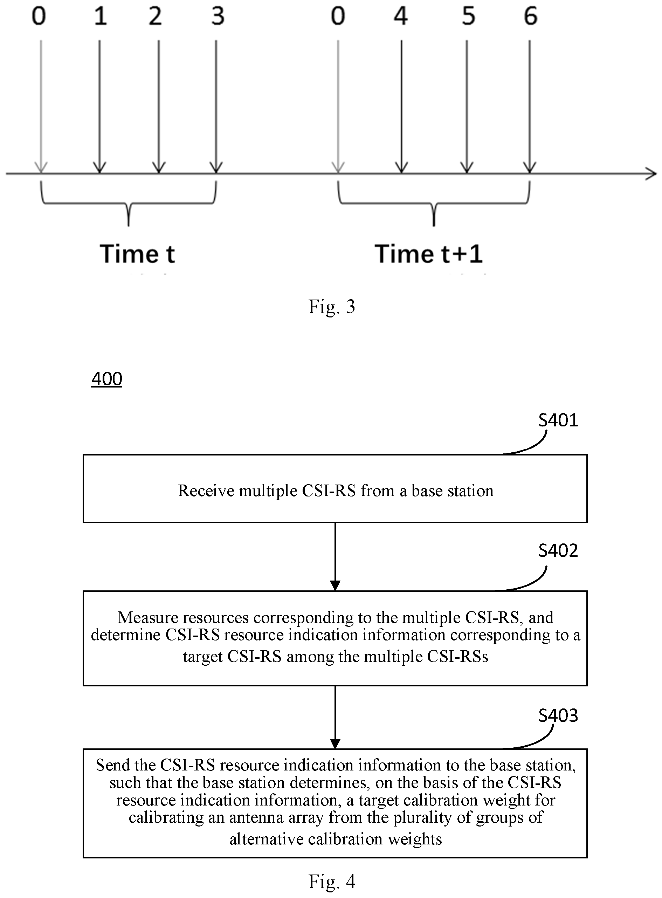

In specific implementation, when the number N of groups of calibration weights in the calibration weight set is greater than the number T of groups of alternative calibration weights, multiple rounds of calibration can be performed on the antenna array. In some cases, in the current round of calibration, at least one group of calibration weights is selected from the calibration weight set except for the alternative calibration weights selected in the previous round of calibration, to replace the alternative calibration weights in the plurality of groups of alternative calibration weights except for the target calibration weights determined in the previous round of calibration. For example, as shown in Fig. 3, assuming that the number of groups of calibration weights is N=7 and the number of groups of alternative calibration weight is T=4 in the calibration weight set. In the first round of calibration, the base station selects 4 groups of alternative calibration weights {0,1,2,3} from the calibration weight set. If the target calibration weight is 0, in the second round of calibration, at least one group of calibration weight values is selected from the calibration weights {4, 5, 6} in the calibration weight set except for the selected alternative calibration weights {0, 1, 2, 3}, to replace the alternative calibration weights in {0, 1, 2, 3} except for {0}, such as {0, 4, 5, 6}.

Further, CSI-RS corresponding to the groups of alternative calibration weights are sent to the target terminal; the target calibration weight in the present round of calibration is determined on the basis of the CSI-RS resource indication information fed back by the target terminal, the antenna array is calibrated, and the above process is repeated until all calibration weights in the calibration weight set are selected; and the antenna array is calibrated on the basis of the target calibration weight determined in the final round of calibration.

In this way, by distributing different groups of calibration weights in the calibration weight set to the target terminal, the target calibration weight in each round of calibration is determined on the basis of the CSI-RS resource indication information fed back by the target terminal each time, and the antenna array; is calibrated and after all calibration weights in the calibration weight set are selected, the antenna array is calibrated on the basis of the target calibration weight determined in the final round of calibration. Thus, downlink channel measurement that better match the target terminal can be achieved gradually, antenna array calibration can be achieved in a better way, and the downlink transmission rate of the target terminal is improved.

In a possible implementation, in the above Step S101, sending, to the target terminal, the CSI-RS corresponding to groups of alternative calibration weights includes that: an initial channel state information reference signal is obtained; the initial channel state information reference signal is compensated with each group of alternative calibration weights from the plurality of groups of alternative calibration weights, and the CSI-RS corresponding to each group of alternative calibration weights is obtained; and the channel state information reference signal CSI-RS is sent to the target terminal.

Thus, the base station selects a plurality of groups of alternative calibration weights from the calibration weight set, the initial channel state information reference signal is compensated with each group of alternative calibration weights, and the CSI-RS corresponding to each group of alternative calibration weights is obtained; and multiple CSI-RS are sent to the target terminal to obtain the downlink channel measurement matching the target terminal.

In a possible implementation, in the above Step S102, determining the target calibration weight from the plurality of groups of alternative calibration weights on the basis of CSI-RS resource indication information fed back by the target terminal includes that: the channel state information, which is fed back from the target terminal after channel state measurement on the basis of the CSI-RS, is received; and the CSI-RS resource indication information is obtained from the channel state information, and the alternative calibration weight indicated by the CSI-RS resource indication information is determined as the target calibration weight in the plurality of groups of alternative calibration weights.

In specific implementation, after measuring the channel state based on CSI-RS, the target terminal can send channel state information (CSI) to the base station. The channel state information can include CSI-RS resource indication information (also called a CSI resource indicator, CRI), a rank indicator (RI), a precoding matrix index (PMI), or a channel quality indicator (CQI). CSI-RS is obtained from CSI, and the alternative calibration weight indicated by the CRI is determined as the target calibration weight in the plurality of groups of alternative calibration weights.

Prior to receiving the channel state information which is fed back by the target terminal after measurement on the basis of the CSI-RS, the method further includes that: CSI measurement configuration and CSI feedback configuration are sent to the target terminal, wherein the CSI measurement configuration information is used to indicate the target terminal to receive CSI-RS resources, and the CSI feedback configuration information is used to indicate the target terminal to feedback channel state information after measuring the received CSI-RS resources.

In a possible implementation, in the above Step S103, after calibrating the antenna array on the basis of the target calibration weight, the method further includes that: a precoding matrix index corresponding to the CSI-RS resource indication information is obtained; the target calibration weight is multiplied with the precoding matrix index to obtain a beamforming weight; and beamforming is performed on a physical downlink shared channel of the antenna array on the basis of the beamforming weight.

In specific implementation, the base station can obtain the precoding matrix index PMI corresponding to the CSI-RS resource indication information based on the CSI feedback from the target terminal, multiply the target calibration weight with the PMI to obtain the beamforming weight; perform beamforming on the physical downlink shared channel (PDSCH) of the antenna array on the basis of the beamforming weight, such that the radiation direction and power distribution of the antennas are adjusted, signal focusing is achieved in the area where the target terminal is located, and thus, the signal transmission efficiency is improved and the user experience is enhanced.

Fig. 4 shows a flowchart of another antenna calibration method provided by the embodiments of the present application, which is used for a target terminal. As shown in the figure, the method 400 may include the following steps.

At Step S401: multiple channel state information reference signals (CSI-RS) are received from a base station.

Each channel state information reference signals (CSI-RS) corresponding to alternative calibration weights, and the alternative calibration weights belong to any one group among a plurality of groups of alternative calibration weights which are selected by the base station from a calibration weight set;

At Step S402: resources corresponding to the multiple CSI-RS are measured, and CSI-RS resource indication information corresponding to the target CSI-RS is determined from the multiple CSI-RS.

At Step S403: the CSI-RS resource indication information is sent to the base station, such that on the basis of the CSI-RS resource indication information, the base station determines a target calibration weight for calibrating ran antenna array from the plurality of groups of alternative calibration weights.

In specific implementation, after receiving multiple channel state information reference signals CSI-RS from the base station, the target terminal measures the resources corresponding to multiple CSI-RS and calculates the required channel state information CSI, such as the optimal CSI-RS resource indication information, and reports the same to the base station, so that the base station can determine the target calibration weight for calibrating the antenna array among the plurality of groups of alternative calibration weights based on the CSI-RS resource indication information.

In a possible implementation, in the above Step S403, sending the CSI-RS resource indication information to the base station includes that: the CSI measurement configuration information is received from the base station; the channel state information corresponding to the CSI measurement configuration information is sent to the base station, wherein the channel state information includes the CSI-RS resource indication information.

In specific implementation, the target terminal also receives CSI measurement configuration information from the base station and sends the channel state information corresponding to the CSI measurement configuration information to the base station, wherein the channel state information may include CSI-RS resource indication information (also CSI-RS resource indicator, CRI), a rank indicator (RI), a precoding matrix index (PMI), or a channel quality indicator (CQI).

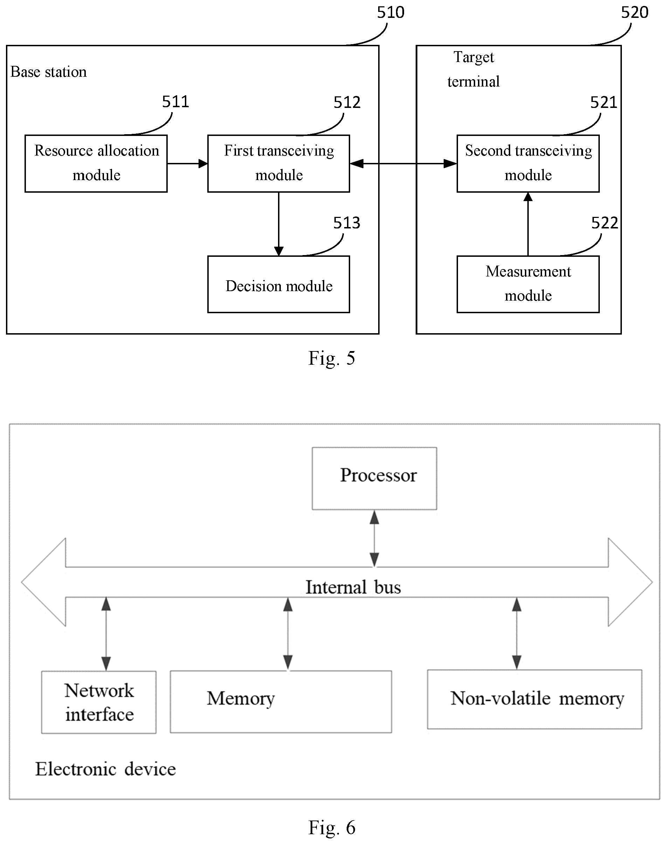

Fig. 5 shows a schematic diagram of the structure of an antenna calibration system provided by the embodiments of the present application. As shown in the figure, the antenna calibration system includes a base station 510 and a target terminal 520; wherein the base station 510 includes a resource allocation module 511, a first transceiving module 512, and a decision module 513; the resource allocation module 511 is used to select a plurality of groups of alternative calibration weights from a calibration weight set, and send channel state information reference signals (CSI-RS) corresponding to the plurality of groups of alternative calibration weights to a target terminal 520; the first transceiving module 512 is used to receive the CSI-RS resource indication information fed back from the target terminal 520, and send the CSI-RS resource indication information to the decision module 513; and the decision module 513 is used to determine a target calibration weight from the plurality of groups of alternative calibration weights on the basis of CSI-RS resource indication information fed back by the target terminal 520; and calibrate an antenna array on the basis of the target calibration weight.

The target terminal 520 includes a second trasceiving module 521 and a measurement module 522; the second trasceiving module 521 is used to receive multiple channel state information measurement reference signals CSI-RS from the base station 510; wherein each channel state information reference signal (CSI-RS) corresponds to alternative calibration weight, and the alternative calibration weights belong to any one group among a plurality of groups of alternative calibration weights which are selected by the base station from a calibration weight set; and to send the CSI-RS resource indication information to the base station 510, such that the base station 510 determines the target calibration weight for calibrating an antenna array from the plurality of groups of alternative calibration weights on the basis of the CSI-RS resource indication information.

The measurement module 522 is used to measure the resources corresponding to the multiple CSI-RS and determine the CSI-RS resource indication information for the target CSI-RS from the multiple CSI-RS.

Fig. 6 shows a schematic diagram of the hardware structure of the electronic device provided by the embodiment of the present application. Referring to this figure, at the hardware level, the electronic device includes a processor, and in one embodiment, it includes an internal bus, network interface, and memory. Where the memory may include inter memory, such as high-speed random access memory (RAM), and may also include non-volatile memory, such as at least one disk storage. The electronic device may also include hardware required for other services.

The processor, network interface, and memory can be interconnected via an internal bus, which can be the Industry Standard Architecture (ISA) bus, Peripheral Component Interconnect (PCI) bus, or Extended Industry Standard Architecture (EISA) bus. The bus can be divided into address bus, data bus, control bus, etc. For ease of representation, only one bidirectional arrow is used in the figure, but it does not indicate that there is only one bus or one type of bus.

The memory can store programs. Specifically, the program may include program code, which includes computer operation instructions. Memory can include both inter memory and non-volatile memory, and provide instructions and data to the processor.

The processor reads the corresponding computer program from non-volatile memory into memory and runs it, forming an apparatus for locating the target user at the logical level. The processor executes the program stored in the memory and specifically executes the methods disclosed in the embodiments shown in Fig. 1 or Fig. 4, and implements the functions and beneficial effects of the methods described in the previous embodiments, which will not be repeated here.

The method disclosed in the embodiments shown in Fig. 1 or Fig. 4 of the present application can be implemented in or by the processor. The processor may be an integrated circuit chip with signal processing capabilities. In the implementation process, each step of the above method can be completed through hardware integrated logic circuits or software instructions in the processor. The above-mentioned processor can be a general-purpose processor, including a Central Processing Unit (CPU), a Network Processor (NP), etc; It can also be a Digital Signal Processor (DSP), Application Specific Integrated Circuit (ASIC), Field Programmable Gate Array (FPGA), or other programmable logic devices, discrete gates or transistor logic devices, or discrete hardware components. The disclosed methods, steps, and logical diagrams in the embodiments of the present application can be implemented or executed. A general-purpose processor can be a microprocessor or any conventional processor. The steps of the method disclosed in the embodiments of the present application can be directly reflected as being executed by a hardware decoding processor, or executed by a combination of hardware and software modules in the decoding processor. Software modules can be located in mature storage medium in this field, such as random access memory, flash memory, read-only memory, programmable read-only memory, or electrically erasable programmable memory, registers, etc. The storage medium is located in the memory, and the processor reads the information from the memory and completes the steps of the above method in conjunction with its hardware.

The computer device can also execute the various methods described in the previous method embodiments, and achieve the functions and beneficial effects of the various methods described in the previous method embodiments, which will not be repeated here.

In addition to software implementation, the electronic device of the present application does not exclude other implementation methods, such as logic devices or a combination of software and hardware. That is to say, the executing subject of the following processing flow is not limited to each logic unit, but can also be hardware or logic devices.

The embodiments of the present application also propose a computer-readable storage medium that stores one or more programs. When executed by an electronic device comprising multiple application programs, the one or more programs enable the electronic device to perform the methods disclosed in the embodiments shown in Fig. 1 or Fig. 4 and achieve the functions and beneficial effects of the methods described in the previous embodiments, which will not be repeated here.

The computer-readable storage medium includes Read Only Memory (ROM), Random Access Memory (RAM), magnetic disk or optical disk, etc.

Furthermore, the embodiments of the present application also provide a computer program product, which comprises a computer program stored on a non transient computer-readable storage medium, the computer program comprising program instructions. When the program instructions are executed by a computer, the following process is implemented: the method disclosed in the embodiments shown in Fig. 1 or Fig. 4 and the functions and beneficial effects of the methods described in the previous embodiments are implemented, which will not be repeated here.

The embodiments of the present application can be applied to various electronic device collaboration or interconnection scenarios, including: collaboration and interconnection between mobile phones and laptops/tablets; Collaboration and interconnection between mobile terminals and smart TVs/displays; Collaboration and interconnection between mobile phones or tablets and in car entertainment systems; Collaboration and interconnection between mobile terminals and intelligent conference systems. So as to meet the diverse needs of users in smart homes, smart offices, smart travel and other scenarios.

In summary, the above description is only a preferred embodiment of the present application and does not limit the scope of protection of the present application. Any modifications, equivalent substitutions, improvements, etc. made within the spirit and principles of present application shall be included within the scope of protection of the present application.

The system, apparatus, module, or unit described in the above embodiments can be implemented by computer chips or entities, or by products with certain functions. A typical implementation device is a computer. Specifically, computers can include personal computers, laptops, cellular phones, camera phones, smartphones, personal digital assistants, media players, navigation devices, email devices, game consoles, tablets, wearable devices, or any combination of these devices.

The computer readable medium, including permanent and non permanent, removable and non removable medium, can be used by any method or technology to achieve information storage. Information can be computer-readable instructions, data structures, modules of programs, or other data. Examples of storage medium for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic disk storage or other magnetic storage devices, or any other non transmission medium that can store information that can be accessed by computing devices. According to the definition in this article, computer-readable media does not include computer-readable transitory media such as modulated data signals and carriers.

It should also be noted that the terms "including", "containing" or any other variation thereof are intended to encompass non exclusive inclusion, such that a process, method, product or equipment that includes a series of elements not only includes those elements, but also includes other elements not explicitly listed, or also includes elements inherent to such process, method, product or equipment. Without further limitations, the element defined by the statement "including a ......" does not exclude the existence of other identical elements in the process, method, product, or equipment that includes the element in question.

The various embodiments in this manual are described in a progressive manner, and the same and similar parts between each embodiment can be referred to each other. Each embodiment focuses on the differences from other embodiments. Especially for the system embodiment, due to its basic similarity to the method embodiment, the description is relatively simple. For relevant information, please refer to the partial explanation of the method embodiment.

## Claims

1. An antenna calibration method, performed by a base station, comprising:
selecting a plurality of groups of alternative calibration weights from a calibration weight set, and sending, to a target terminal, channel state information reference signals called CSI-RS corresponding to the plurality of groups of alternative calibration weights;
determining, on the basis of CSI-RS resource indication information fed back by the target terminal, a target calibration weight from the plurality of groups of alternative calibration weights; and
calibrating an antenna array on the basis of the target calibration weight.

2. The method according to claim 1, wherein selecting the plurality of groups of alternative calibration weights from the calibration weight set comprises:
obtaining measurement capacity configuration information of the target terminal; and
selecting the plurality of groups of alternative calibration weights that match the measurement capacity configuration information from the calibration weight set.

3. The method according to claim 1, wherein,
performing, upon the condition that a number of groups of calibration weights in the calibration weight set is greater than a number of groups of alternative calibration weights, multiple rounds of calibration comprises:
in a current round of calibration, selecting at least one group of calibration weights from the calibration weight set except for selected alternative calibration weights, to replace alternative calibration weights in the plurality of groups of alternative calibration weights except for a target calibration weight determined in a previous round of calibration; and
sending to the target terminal CSI-RS corresponding to the plurality of groups of alternative calibration weights; determining a target calibration weight in the current round of calibration on the basis of the CSI-RS resource indication information fed back by the target terminal, calibrating the antenna array, and repeating this process until all calibration weights in the calibration weight set are selected;
wherein calibrating the antenna array on the basis of the target calibration weight comprises:
calibrating the antenna array on the basis of a target calibration weight determined in a final round of calibration.

4. The method according to claim 1, wherein sending, to the target terminal, the CSI-RS corresponding to the plurality of groups of alternative calibration weights comprises:
obtaining an initial channel state information reference signal;
compensating the initial channel state information reference signal with each group of alternative calibration weights in the plurality of groups of alternative calibration weights, and obtaining the CSI-RS corresponding to each group of alternative calibration weights; and
sending the channel state information reference signal CSI-RS to the target terminal.

5. The method according to claim 1, wherein determining, on the basis of the CSI-RS resource indication information fed back by the target terminal, the target calibration weight from the plurality of groups of alternative calibration weights, comprises:
receiving channel state information which is fed back by the target terminal after channel state measurement on the basis of the CSI-RS; and
obtaining the CSI-RS resource indication information from the channel state information, and determining an alternative calibration weight indicated by the CSI-RS resource indication information as the target calibration weight in the plurality of groups of alternative calibration weights.

6. The method according to claim 1, wherein after calibrating the antenna array on the basis of the target calibration weight, further comprising:
obtaining a precoding matrix index corresponding to the CSI-RS resource indication information;
multiplying the target calibration weight with the precoding matrix index to obtain a beamforming weight; and
beamforming a physical downlink shared channel of the antenna array on the basis of the beamforming weight.

7. The method according to claim 1, wherein the calibration weight set is determined in the following way:
determining calibration weights of multiple polarized antennas in the antenna array according to a predefined rule; and
determining the calibration weight set on the basis of the calibration weights of multiple polarized antennas in the antenna array.

8. The method according to claim 7, wherein the predefined rule comprises:
determining polarized antenna pairs of the antenna array on the basis of polarization directions of the multiple polarized antennas, each polarized antenna pair comprising a first polarized antenna and a second polarized antenna;
using any polarized antenna pair among the polarized antenna pairs as a reference antenna pair, and using a calibration weight of a first polarized antenna in the reference antenna pair as a reference weight; and determining the reference weight as a calibration weight of a first polarized antenna in a target antenna pair, the target antenna pair being any polarized antenna pair among the polarized antenna pairs; and
determining a calibration weight of a second polarized antenna in the target antenna pair on the basis of the reference weight, a first phase difference, and a second phase difference, wherein the first phase difference is a phase difference between the first polarized antenna in the reference antenna pair and a second polarized antenna in the reference antenna pair, and the second phase difference is a phase difference between the target antenna pair and the reference antenna pair.

9. An antenna calibration method, performed by a target terminal, comprising:
receiving multiple channel state information reference signals called CSI-RS from a base station; wherein each CSI-RS corresponds to alternative calibration weights, and the alternative calibration weights belong to any one group among a plurality of groups of alternative calibration weights which are selected by the base station from a calibration weight set;
measuring resources corresponding to the multiple CSI-RS, and determining CSI-RS resource indication information corresponding to a target CSI-RS from the multiple CSI-RS;
sending the CSI-RS resource indication information to the base station, wherein the CSI-RS resource indication information is used by the base station to determine a target calibration weight for calibrating an antenna array from the plurality of groups of alternative calibration weights.

10. An electronic device, comprising a processor and a memory, the memory storing programs or instructions executable on the processor, which when executed by the processor, implements the steps of the method according to any one of claims 1 to 9.

11. A readable storage medium, storing programs or instructions, which when executed by a processor, implements the steps of the method according to any one of claims 1 to 9.
